# EUROPEAN PATENT APPLICATION

(11) **EP 4 718 214 A1**
(43) Date of publication of application: **01.04.2026**
(21) Application number: 25203586.0
(22) Date of filing: 22.09.2025
(51) Int. Cl.: G06F 3/01

(54) **HAND AND GAZE-BASED INTERACTIONS WITH AN EXTERNAL DEVICE'S DISPLAY**

(30) Priority: 27.09.2024 US 202463700177 P; 19.09.2025 US 202519333996
(71) Applicant: Apple Inc., Cupertino, CA 95014 (US)
(72) Inventor: BIETTE, Nathan Jean Emmanuel, Cupertino, 95014 (US); DALLA-ROSA, Damien, Cupertino, 95014 (US); CHAPDELAINE-COUTURE, Vincent, Cupertino, 95014 (US)
(74) Representative: Zacco Denmark A/S

(57) **Abstract**

Various implementations disclosed herein include devices, systems, and methods in which a head-mounted device (HMD) tracks a user's gaze and hand to augment the input capabilities of a detected display of another device, e.g., a laptop, TV, automobile device, etc. In some implementations, sensor data captured via a wearable device is used to identify a position of another device's display and/or recognize gaze and/or hand activity to identify interactions associated with content displayed on that other device's display.

## Description

### TECHNICAL FIELD

The present disclosure generally relates to detecting and interpreting user activities involving user gaze and hand movements during use of multiple electronic devices.

### BACKGROUND

Existing user interaction systems may be improved with respect to efficiently and effectively facilitating user input and other interactions in multi-device environments.

### SUMMARY

Various implementations disclosed herein include devices, systems, and methods in which a head-mounted device (HMD) tracks a user's gaze and hand to augment the input capabilities of a detected display of another device, e.g., a laptop, TV, automobile device, etc.

In some implementations, a processor performs a method by executing instructions stored on a computer readable medium. The method may be performed at an HMD that includes a processor and one or more sensors. The method involves determining a three-dimensional (3D) position of a display of a second device, wherein content originating from the second device is visible to a user of the HMD. The second device may be detected using sensor data, e.g., via proximity-based detection or computer vision. The second device may display content, provide GUIs, produce audio, etc. The HMD may detect the second device's position (e.g., where the display is) using its own sensor data or data from other devices. The content from the second device may be visible on the display of the second device or an associated display, e.g., a headsup/infotainment display provided in a car.

The method further involves determining a gaze direction of the user based on sensor data obtained via the one or more sensors (e.g., via inward/user-facing eye sensors). The method further involves identifying a portion of the content displayed by the second device based on the gaze direction and the 3D position of the display. In one example, this involves identifying the coordinate on the display. In another example, this involves identifying the user interface object at which the user is looking. The method further involves tracking a hand of the user based on sensor data obtained via the one or more sensors. This may involve detecting an input gesture (e.g., a pinch, the user tapping the steering wheel, the user tapping the top of the other hand while typing, etc.). The method further involves providing information to the second device based on identifying the portion of the content and the hand tracking, wherein the second device detects input associated with the content based on the information.

In accordance with some implementations, a device includes one or more processors, a non-transitory memory, and one or more programs; the one or more programs are stored in the non-transitory memory and configured to be executed by the one or more processors and the one or more programs include instructions for performing or causing performance of any of the methods described herein. In accordance with some implementations, a non-transitory computer readable storage medium has stored therein instructions, which, when executed by one or more processors of a device, cause the device to perform or cause performance of any of the methods described herein. In accordance with some implementations, a device includes: one or more processors, a non-transitory memory, and means for performing or causing performance of any of the methods described herein.

### BRIEF DESCRIPTION OF THE DRAWINGS

So that the present disclosure can be understood by those of ordinary skill in the art, a more detailed description may be had by reference to aspects of some illustrative implementations, some of which are shown in the accompanying drawings.
Figure 1 illustrates an exemplary electronic device operating in a physical environment, in accordance with some implementations.
Figure 2 illustrates a view provided by the electronic device of figure 1 in which the electronic device detects gaze data to facilitate gaze-based feedback associated with a second device, in accordance with some implementations.
Figure 3 illustrates a view provided by the electronic device of figure 1 in which the electronic device detects gaze data and hand data to facilitate input to a second device, in accordance with some implementations.
Figure 4 illustrates a view provided by the electronic device of figure 1 in which the electronic device detects gaze data to facilitate input to a second device, in accordance with some implementations.
Figure 5 illustrates a view provided by an electronic device in which the electronic device detects gaze data and hand data to facilitate input to a second device, in accordance with some implementations.
Figure 6 illustrates a view provided by an electronic device in which the electronic device detects gaze data and hand data to facilitate input to a second device, in accordance with some implementations.
Figure 7 is a flowchart illustrating a method that tracks a user's gaze and hand to augment the input capabilities of a detected display of another device, in accordance with some implementations.
Figure 8 is a block diagram of an electronic device, in accordance with some implementations.

In accordance with common practice the various features illustrated in the drawings may not be drawn to scale. Accordingly, the dimensions of the various features may be arbitrarily expanded or reduced for clarity. In addition, some of the drawings may not depict all of the components of a given system, method or device. Finally, like reference numerals may be used to denote like features throughout the specification and figures.

### DESCRIPTION

Numerous details are described in order to provide a thorough understanding of the example implementations shown in the drawings. However, the drawings merely show some example aspects of the present disclosure and are therefore not to be considered limiting. Those of ordinary skill in the art will appreciate that other effective aspects and/or variants do not include all of the specific details described herein. Moreover, well-known systems, methods, components, devices and circuits have not been described in exhaustive detail so as not to obscure more pertinent aspects of the example implementations described herein.

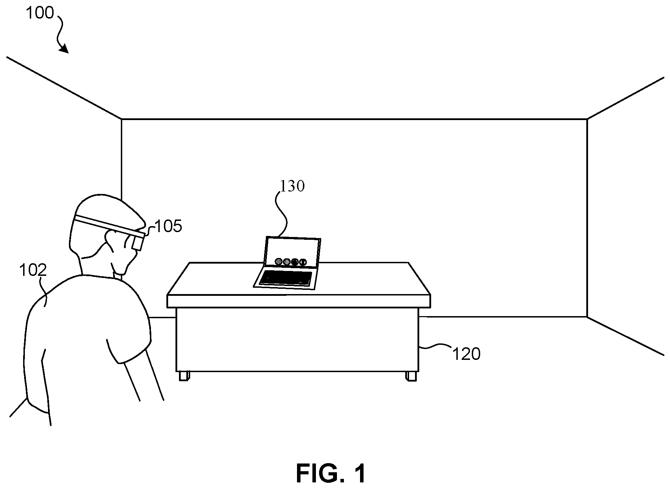

**Figure 1** illustrates an exemplary electronic device 105 operating in a physical environment 100. In the example of Figure 1, the physical environment 100 is a room that includes a desk 120. The electronic device 105 and a second electronic device 130 are separate and distinct devices, e.g., using different processing units, different input mechanisms, different output mechanisms, etc. and are capable of functioning independently of one another. However, the devices may be in communication with one another and/or may be configured to share information with one another. The circumstances in which the devices connect to one another and/or share information may be limited and/or conditioned upon an authentication process, e.g., a process that confirms that the devices are authorized to communicate with one another, associated with a same user or user account, etc. In some implementations, a recognition process on one or both of the electronic device 105 and second electronic device 130 recognizes the other device in the physical environment 100. This may be based on sensor data, e.g., image data used via a computer vision technique to identify the other respective device, location data, e.g., from GPS, etc., and/or other information, e.g., RFID detection, etc. In some implementations, a connection process on one or both of the electronic device 105 and second electronic device 130 established a wireless communication connection between the devices based on determining that one or more criteria are satisfied.

The electronic device 105 may include one or more cameras, microphones, depth sensors, or other sensors that can be used to capture information (e.g., images, sound, lighting characteristics, etc.) about and evaluate the physical environment 100 and the objects within it, as well as information about the user 102 of electronic device 105. The information about the physical environment 100 and/or user 102 may be used supplement the user's experience with respect to using one or more separate devices, such as second electronic device 130.

In some implementations, sensor information from the electronic device 105 provides information about the physical environment 100 and/or user 102 that may be used to identify the location of the second device 130, e.g., the location of boundaries of a display of the second device 130 (e.g., display corner point and/or corner coordinates). In some implementations, sensor information from the electronic device 105 provides information about the user 102 relative to the elements in physical environment 100. For example, sensor data from one or more outward and/or user facing cameras may be used to identify elements within the physical environment, the user's positional relationship to such elements, and/or how the user is interacting with those elements (e.g., looking at the second device 130 or otherwise exhibiting an intention to interact with the second device 130, etc.). In some implementations sensors on the electronic device 105 capture sensor data that is used to determine and track a gaze direction and/or hand position/configuration. Such gaze data and/or hand data may be used to identify the user's intention to interact with the second electronic device 130 via gaze and/or hand-based input modalities.

In some implementations, the electronic device 105 does not include a display and the user views the physical environment 100 directly, e.g., using optical see-through components and/or through transparent lenses on the electronic device 105. In some implementations, such lenses are not configured to display content. In some implementations, such lenses are configured to display content (e.g., presenting an extended reality (XR) environment by displaying augmentations or other virtual content (that augments the user's view of the physical environment 100) using optical waveguides that transmit light to display content on the lenses).

In some implementations, the electronic device 105 includes a display that presents views of the physical environment 100 that are based on images captured by outward-facing cameras on the electronic device 105, e.g., by providing passthrough video, with or without added virtual content. In some implementations, the display presents an XR environment by displaying augmentations or other virtual content (that augments displayed depictions of the physical environment 100).

In various implementations, views of an XR environment may be provided via the electronic device 105. Such an XR environment may include passthrough video views of a 3D environment (e.g., the proximate physical environment 100) that are generated based on camera images and/or depth camera images of the physical environment 100. Such an XR environment may include virtual content that is positioned at 3D locations relative to a 3D coordinate system associated with the XR environment, which may correspond to a 3D coordinate system of the physical environment 100. The virtual content may augment the appearance of content displayed by the second electronic device 130 (e.g., displaying highlighting that appears around a UI element being displayed by the second electronic device 130 to indicate that the user is gazing at it) and/or displaying content that duplicates some or all of the content displayed by the second electronic device 130 (e.g., duplicating the content in a more desirable/ convenient position for the user, for example, to provide a virtual heads up display with content from the second electronic device 130).

In some implementations, views of an XR environment may be provided to one or more participants (e.g., user 102 and/or other participants not shown) via first electronic device 105 (e.g., a wearable device such as an HMD). Such an XR environment may include views of a 3D environment that are generated based on camera images and/or depth camera images of the physical environment 100. Such an XR environment may include virtual content that is positioned at 3D locations relative to a 3D coordinate system (i.e., a 3D space) associated with the XR environment, which may correspond to a 3D coordinate system of the physical environment 100.

In some implementations, video (e.g., pass-through video depicting a physical environment) is received from an image sensor of a device (e.g., device 105). In some implementations, a 3D representation of a virtual environment is aligned with a 3D coordinate system of the physical environment. A sizing of the 3D representation of the virtual environment may be generated based on, for example, a scale of the physical environment or a positioning of an open space, floor, wall, etc., such that the 3D representation is configured to align with corresponding features of the physical environment. In some implementations, a viewpoint (e.g., of the user 102) within the 3D coordinate system may be determined based on a position of the electronic device within the physical environment. The viewpoint may be determined based on, for example, image data, depth sensor data, motion sensor data, etc., which may be retrieved via a virtual inertial odometry system (VIO), a simultaneous localization and mapping (SLAM) system, etc.

In some implementations, views of an XR environment are provided via an HMD (e.g., AR glasses) that includes a see-through display, wherein virtual content is presented within the views. For example, such a device may comprise one or more lenses through which the user 102 observes the physical environment 100 and a presentation component (e.g., one or more light sources and/or one or more waveguides) that cause virtual content to be viewed by the user within the views seen through the one or more lenses.

Some implementations involve an electronic device, such as electronic device 105, that has sensors configured and positioned to capture sensor data about a user's gaze and hands, to use that information to enable hand and/or gaze-based interactions with an external device's display (e.g., with the second electronic device 130). In some implementations, the electronic device 105 is a wearable device with interior and exterior sensors (e.g., smart glasses or other HMD with cameras, motion sensors, depth sensors, etc.). In some implementations, the electronic device 105 is a wearable device that provides gaze-based interactions with another device's display, which may not have its own gaze tracking capabilities. In some implementations, the electronic device 105 is a wearable device that provides hands-based interactions with another device's display, which may not have its own hands tracking capabilities.

Some electronic devices that display content to a user may lack gaze and/or hands tracking capabilities, e.g., only having button, touchscreen, mouse, keyboard, etc. input modalities. It may be undesirable to be limited to those input modalities in some circumstances. For example, a use may find it cumbersome to have to interact with a car's infotainment system via its standard input modalities, e.g., having to take their eyes off the road and use their hands to manually interact with sometimes small touchscreen buttons. Such interactions may be even more cumbersome in various circumstances, having traffic, road conditions that provide significant car vibrations, etc. In some circumstances, a user may find it cumbersome or undesirable to take their eyes off of the road and steady their hand to tap buttons, and may elect to postpone or not initiate input to the device until a later time.

Some implementations described herein enables a user to interact touchlessly with an external device such as a car's infotainment system. This may involve a wearable device (e.g., smart glasses or other HMD) worn by the driver/user pairing with the other device/display screen, tracking the position of that display screen in 3D space, and tracking the driver's/user's gaze and/or hands.

In the case of the wearable device providing passthrough video of the physical environment, the wearable device may identify what the user is looking at on the wearable device's own internal display (e.g., an HMD's internal display) and determined what that position maps to on the external display. For example, an HMD may display passthrough video (on the HMD's near-eye display(s)) that includes a depiction of a laptop display and one or more UI elements displayed thereon. The HMD may determine that the user is looking / gazing at a position on its near-eye displays that corresponds to a position on the display of the laptop that corresponds to a depiction of a first icon displayed by the laptop, and enhance the user's experience accordingly. For example, the HMD may itself provide feedback, e.g., making it appear that the icon A is highlighted while the user looks at it, and/or notify the laptop that the user is interacting with icon A.

In the case of the wearable device providing see-through video of the physical environment, e.g., the user is looking through glass lenses of the wearable device, the wearable device may track the user's gaze direction to determine what direction in the physical environment the user is looking, identify that that direction intersects with a display of an external device (e.g., a laptop) at a particular position on the laptop's display area that corresponds to a depiction of a first icon displayed by the laptop, and enhance the user's experience accordingly. For example, the HMD may itself provide feedback, e.g., making it appear that the icon A is highlighted while the user looks at it, and/or notify the laptop that the user is interacting with icon A.

In cases in which an HMD does not have its own display, the HMD may track the user's gaze and/or hands and facilitate corresponding interactions with an external device. In some implementations, an HMD (e.g., an HMD not having its own display), detects the position of an external device (and/or its display), detects where the user is looking, identifies an intersection with the display (e.g., where the gaze direction intersects the display in 3D space), and then sends information (e.g. a command) to the external device. The external device may respond accordingly, e.g., by the external device, enhancing or changing the appearance of a corresponding icon or other object on its display, initiating an action associated with the icon or other object on its display, etc.

In some implementations, a wearable device uses gaze tracking and understanding of where one or more other device displays are in its physical environment to facilitate interacting with those devices. The positions of such other device displays may involve generating a 3D mapping of the environment, e.g., a SLAM map, of the entire environment or may be limited, e.g., only mapping and tracking the position of the displays of those devices to the wearable device's position.

The external device displays could be associated with numerous types of devices, including, but not limited to, mobile devices, laptop devices, desktop devices, televisions, smart appliances, automobile systems, water-craft systems, aircraft systems, recreational vehicle systems, watches, bracelets, rings, etc.

Some implementations additionally or alternatively use a wearable device's sensors (e.g., outward facing image sensor, depth sensors, etc.) to perform hand/body tracking and enable hand/body-based input for an external device accordingly.

Some implementations involve a wearable device advantageously using its own position relative to the user (e.g., proximate the user's eyes, hand, etc.), user sensor capabilities, processing capabilities, and/or display capabilities to supplement the input and/or display capabilities of one or more other devices in its environment.

Wearable device capabilities may be used to provide display, input, and/or feedback capabilities that the one or more other devices may not otherwise have. In one example, the other device may not be capable of providing gaze-hover feedback (e.g., showing an indication of when a user is looking at an item before the user initiates a click/selection for that item), but such feedback may be provided via the wearable device (e.g., by the wearable device recognizing the user's gazing at a particular UI element and facilitating a graphical indication that indicates this user action).

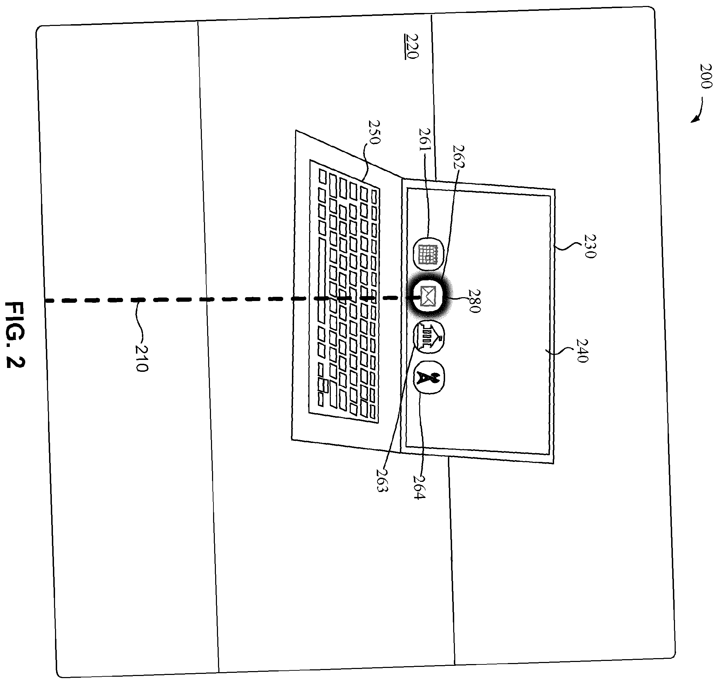

**Figure 2** illustrates a view 200 provided by the electronic device 105 of Figure 1 in which the electronic device 105 detects gaze data to facilitate gaze-based feedback associated with a second device. In this example, the view includes a depiction 230 of the second electronic device, including depiction 240 of its display area, and depictions 261, 262, 263, 264 of content elements being displayed on the display of the second electronic device 130, depiction 250 of a keyboard portion of the second electronic device 130, and depiction 220 of the table 120. In this example, the electronic device 105 determines the gaze direction 210 relative to the view 200. The electronic device 105 determines that the gaze direction 210 intersects the display of the second electronic device 130 (e.g., it intersects the depiction 240) at a position that corresponds to user interface element 262. Based on this, an indication (e.g., glow 280) is presented around the user interface element. The indication may be presented by the electronic device 105 notifying the second electronic device 130 and the second electronic device altering its display of content to include the indication (e.g., glow). Alternatively, the indication may be presented by the electronic device 105 itself displaying content (e.g., overlaid around the depiction 262) to provide the appearance of the indication (e.g., glow) directly in the view 200.

In some implementations, the other/second device may not be capable of recognizing hand gesture-based input (e.g., user pinches, pointing in air, etc.). but gestures may be detected and provided to the other/second device via the wearable device (e.g., by the wearable device tracking the user hand position and/or configuration to identify gestures and facilitating the other device's receiving those gestures as a form of input).

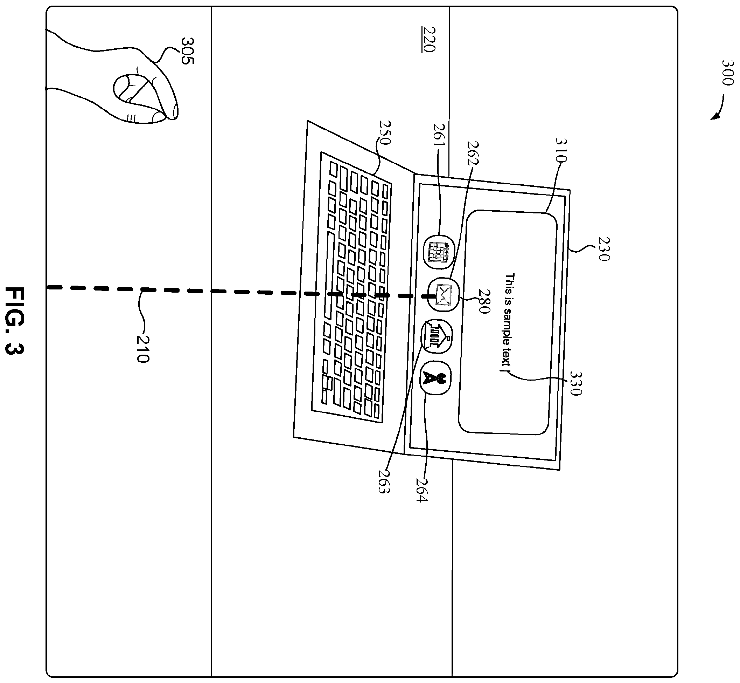

**Figure 3** illustrates a view 300 provided by the electronic device of Figure 1 in which the electronic device 105 detects gaze data and hand data to facilitate input to the second electronic device 130. In this example, the view includes a depiction 230 of the second electronic device, including depiction 240 of its display area, and depictions 261, 262, 263, 264 of content elements being displayed on the display of the second electronic device 130, depiction 250 of a keyboard portion of the second electronic device 130, and depiction 220 of the table 120. In this example, the electronic device 105 determines the gaze direction 210 relative to the view 300 and that the user's hand is performing a pinch gesture (as seen by depiction 305 of the user's hand). The electronic device 105 determines that the gaze direction 210 intersects the display of the second electronic device 130 (e.g., it intersects the depiction 240) at a position that corresponds to user interface element 262. Based on this intersection and identifying the pinch gesture, information is provided to the second electronic device 130 such that the second electronic device 130 responds to the gaze-plus-pinch input, e.g., the functionality associated with that user interface element (corresponding to depiction 230) is activated.

In one example, new input modalities are added. For example, a laptop may recognize click/selection events when a mouse or trackpad selection tool is physically interacted with. The use of a wearable device to supplement this other device's input may involve the wearable device recognizing additional user activities and notifying the other device to trigger the same type of event (i.e., click/selection event). For example, the laptop may not be configured to identify gaze plus pinch interactions, but the wearable device may recognize these interactions (e.g., based on tracking user gaze and hands) and may provide information to the laptop so that it responds to these interactions in the same way it would when the user positions a cursor on UI element and clicks the trackpad of the laptop.

In some implementations, a device that is separate from a wearable device shares information about its content (e.g., its UI element positions, functions, etc.) with the wearable device. For example, it may share the coordinates of icons on its display (e.g., xy positions of corners, edges, etc.), the type of the UI elements (e.g., button, menu, text, etc.), the type of interactions that are capable or permitted for the UI elements, etc. The wearable device can use this information to facilitate enhancement of the input or output capabilities of the device with respect to these content items. For example, based on knowing the position on the other device's screen of a selectable button, the wearable device may recognize when the user is gazing at that position and making a hand gesture to indicate a selection (e.g., a pinch) and, accordingly, notify the other device so it can respond appropriately.

In some implementations, the other device does not share information with the wearable device and the wearable device provides information to the other device that facilities the other device enhancing its input and/or display capabilities. For example, the wearable device may simply share coordinate information (e.g., current gaze position on the display surface / xy coordinate). As another example, the wearable device may simply identify the occurrence of a hand-based event (e.g., a pinch, taping back of hand, tapping steering wheel, etc.). The wearable device may provide information that the other device recognizes, e.g., the wearable device may translate user events associated with one type of input modality into another that the other device will recognize. For example, the wearable device may detect a pinch event and provide information that a mouse-click event has occurred so that the other device recognizes the event without having to be modified to account for the new input modality.

In some implementations, a wearable device facilitates gaze plus voice command-based interactions. For example, the wearable device may recognize that the user is gazing at a particular element of another device's display and then uttering "click this," "select this," "open," etc. The wearable device can then facilitate an appropriate response, e.g., by provide information to the other electronic device regarding the event that occurred.

In some implementations, a wearable device itself displays content to enhance the display and/or interaction capabilities of the other device. For example, it may alter the appearance of a UI element and/or the surrounding area to provide a graphical indication to the user of what the system is recognizing that the user is looking at (e.g., providing gaze-hover feedback). As another example, the wearable device may provide a graphical indication for a second device's display that indicates to the user that input will be associated with that display, e.g., when gaze and/or hand inputs will be associated with a second device (as opposed to such input being associated with the wearable device itself). For example, when the input will be directed to an external device, a glow or other enhancement around the other device or its display may be provided to indicate that that is the case. Such altering of a UI element appearance and/or addition of graphical indications may be accomplished, as examples, via a rendering technique (e.g., blending passthrough video with virtual content) or by augmenting via a digital overlay (e.g., via a display embedded within an optical-see-through device). Conversely, the external device may display or alter the appearance of its own UI element and/or graphical indications.

In some implementations, the wearable device determines to enter a mode in which it will supplement the input and/or output capabilities of another device. It may determine to do so in response to direct user input (e.g., a user selecting option to interact with a particular other device, the user providing a verbal command (e.g., the user saying "send input to my laptop"), etc. In some implementations, the wearable device automatically (e.g., without an explicit command to do so) recognizes that the user is intending to interact with another other device (e.g., with gaze or gaze plus pinch) and, accordingly, enters the mode in which it will supplement the input and/or output capabilities of that other device. In some implementations, the devices recognize one another and determine to connect and/or exchange information to facilitate the input/display enhancement based on criteria, e.g., proximity, being associated with the same account or user, the user providing indications of interacting with the second device while wearing the first device, etc. In one example, a connection and/or interaction mode with another device is automatically initiated when a user's gaze is directed to another device for more than a threshold amount of time. In another example, this occurs based on detecting a specific gesture, e.g., double tap, pointing at the other device, etc.

In some implementations, a wearable device supplements the input capabilities of another device in a way that provides a new and unique combination of input modalities, e.g., the user using the keyboard of the other device to enter text and using gaze-based input to control a cursor position, where the other device recognizes the keyboard input and the wearable device recognizes the gaze-based input. In some implementations, gaze-based input can be used instead of mouse-based input. This may be advantageous for some users, e.g., some users may be more productive if able to type without having to remove their hands to periodically use a mouse to reposition the cursor, highlight text regions, etc. Rather the user may perform these cursor interactions using gaze (or gaze and gestures) while the user's hand remains over the keyboard. In one example, the user gazes at a position and taps a special keyboard key, taps the back of their other hand, taps an open area on the keyboard, etc., to provide gaze-plus-gesture-based cursor input (e.g., that does the same thing as a mouse selection or tap on a touchscreen) without the user's hands needing to leave the area above the keyboard. In some implementations, a cursor may be moved via multiple input modalities provided by the devices (e.g., mouse-based, touchscreen-based, gaze plus gesture-based, etc.) and the system employs rules that account for circumstances in which discrepancies arise, e.g., prioritizing one type of input modality over the others.

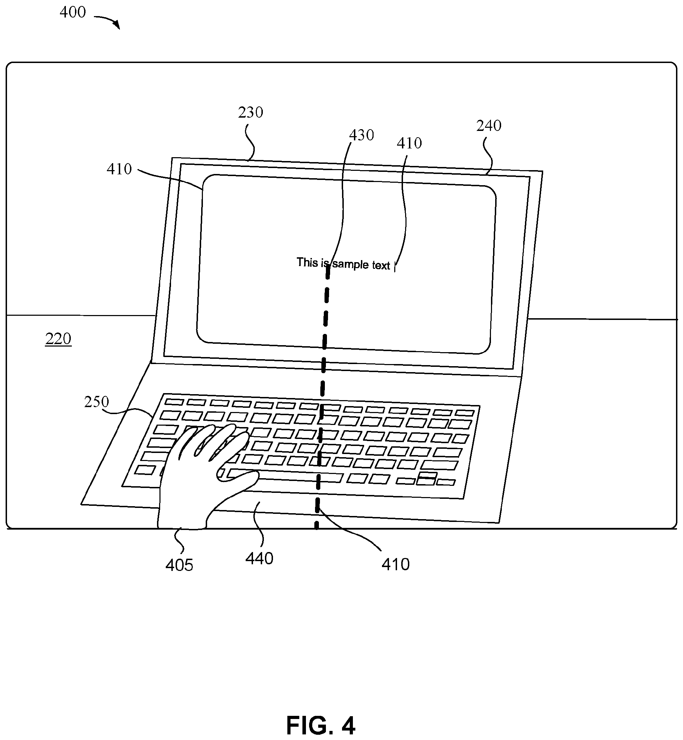

**Figure 4** illustrates a view 400 provided by the electronic device 105 of Figure 1 in which the electronic device 105 detects gaze data to facilitate input to the second electronic device 130. In this example, the view includes a depiction 230 of the second electronic device 130, including depiction 240 of its display area, depiction 410 of a text editor window including text and a text cursor indicator 410 (indicating a current cursor position) being displayed on the display of the second electronic device 130, depiction 250 of a keyboard portion of the second electronic device 130, and depiction 220 of the table 120. In this example, the electronic device 105 determines the gaze direction 410 relative to the view 400 and that the user's hand is performing a tap gesture (as seen by depiction 405 of the user's hand) at location 440 on the second electronic device 130. The electronic device 105 determines that the gaze direction 410 intersects the display of the second electronic device 130, e.g., it intersects at position 430. Based on this intersection and identifying the tap gesture, information is provided to the second electronic device 130 such that the second electronic device 130 responds to the gaze-plus-tap input, e.g., the text cursor 410 will be moved to position 430.

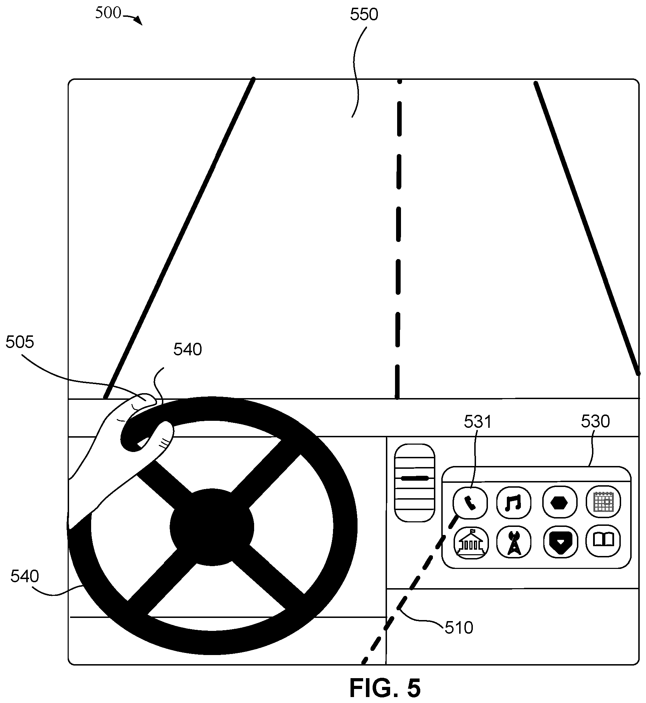

**Figure 5** illustrates a view 500 provided by an electronic device in which the electronic device detects gaze data and hand data to facilitate input to a second device. The view 500 includes a depiction 530 of the display of a car's infotainment system including depiction 531 of a UI element, depiction 540 of a steering wheel of the car, and depiction 550 of the road ahead of the car as would be seen through the car's front windshield. In this example, the electronic device (e.g., a device worn by the user) determines the gaze direction 510 relative to the view 500 and that the user's hand is performing a tap gesture (as seen by depiction 505 of the user's hand) at location 540 on the steering wheel. The electronic device determines that the gaze direction 510 intersects the display of the second electronic device, e.g., it intersects at a position that corresponds to UI element 531. Based on this intersection and identifying the tap gesture, information is provided to the second electronic device such that the second electronic device responds to the gaze-plus-tap input accordingly.

Some implementations involve a wearable device supplementing another device's display capabilities by displaying content from that other device in a position that may be preferable to the user than the position of the device's display. For example, a user may prefer to have content from their automobiles infotainment system displayed in front of their view of the road ahead (e.g., in a way that mimics a heads-up auto display but without the automobile having heads-up capabilities). In this example, the wearable device may obtain the content from the other device and provide virtual content that provides a virtual heads-up display.

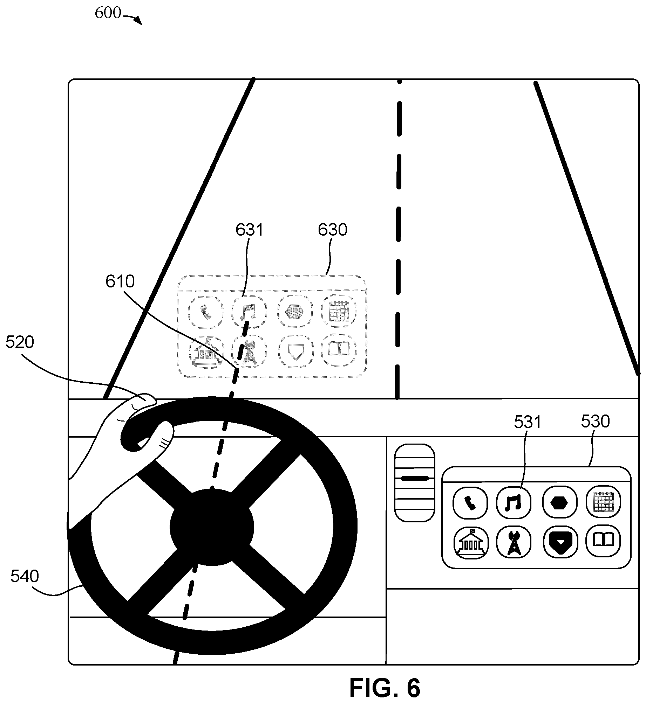

**Figure 6** illustrates a view 600 provided by an electronic device in which the electronic device detects gaze data and hand data to facilitate input to a second device. The view 600 includes a depiction 530 of the display of a car's infotainment system including depiction 531 of a UI element, depiction 540 of a steering wheel of the car, and depiction 550 of the road ahead of the car as would be seen through the car's front windshield. The view 600 further includes a virtual heads-up display 630 presented by the electronic device (i.e., via the wearable device not the car itself) that mimics (or based on) the appearance of the car's infotainment system display, including depiction 631 corresponding to a user interface element of the car's infotainment system associated with depiction 531. In this example, the electronic device (e.g., a device worn by the user) determines the gaze direction 610 relative to the view 600 and that the user's hand is performing a tap gesture (as seen by depiction 505 of the user's hand) at a location on the steering wheel. The electronic device determines that the gaze direction 610 intersects the virtual heads-up display 630, e.g., it intersects at a position that corresponds to depiction 631 corresponding to the user interface element of depiction 531. Based on this intersection and identifying the tap gesture, information is provided to the second electronic device such that the second electronic device responds to the gaze-plus-tap input accordingly.

In some implementations, a wearable device utilizes criteria to distinguish circumstances in which providing enhanced input/display capabilities to another device are appropriate. For example, it may utilize a distance threshold, angle threshold, or relative size threshold to ensure a threshold level of confidence that a user's gaze actually intersects a content item displayed on another device. If the content item is too far away and/or too small in the user's view, the wearable device may have a relatively low confidence level that the gaze direction corresponds to that item. The wearable device may detect low confidence circumstances and take an appropriate action, e.g., notifying the user how to improve the circumstances to enable the capability (e.g., providing a notice to get closer to enable gaze interactions). The system may also provide feedback, e.g., gaze-based feedback highlighting what the system determines the user is looking at, so the user is aware of when the conditions are sufficient for accurate gaze tracking relative to the other device. In another example, the wearable device may automatically provide a zoomed-in view of the other display to enable the user to provide gaze-based input that can be recognized with a higher level of confidence. In another example, the system may require a multi-stage input process in circumstances in which confidence is low to avoid false positive or false negative input recognition.

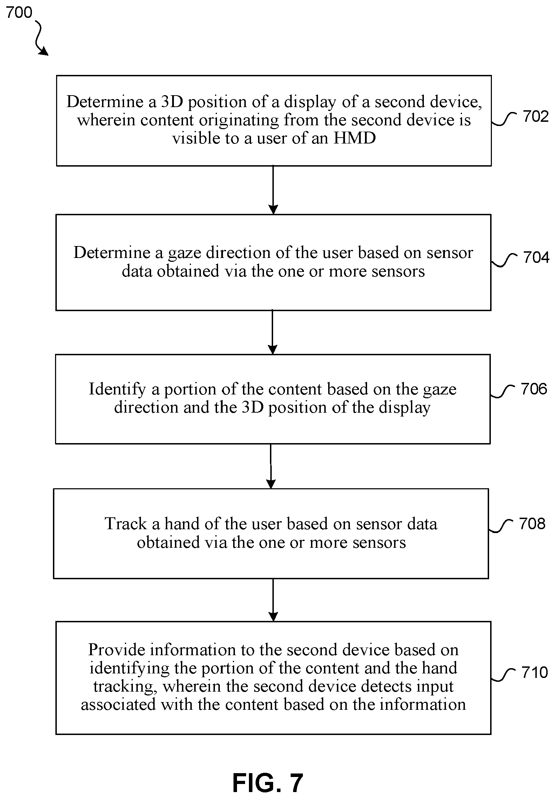

**Figure 7** is a flowchart 700 illustrating a method that tracks a user's gaze and hand to augment the input capabilities of a detected display of another device. In some implementations, a device such as electronic device 105 performs method 700. In some implementations, method 700 is performed via an HMD (e.g., an HMD providing pass-through or see-through views of a physical environment). The method 700 is performed by processing logic, including hardware, firmware, software, or a combination thereof. In some implementations, the method 700 is performed on a processor executing code stored in a non-transitory computer-readable medium (e.g., a memory).

At block 702, the method 700 involves determining a 3D position of a display of a second device, wherein content originating from the second device is visible to a user of the HMD. The second device may be detected using sensor data, e.g., via proximity-based detection or computer vision. The second device may display content, provide GUIs, produce audio, etc. The HMD may detect the second device's position (e.g., where the display is) using its own sensor data or data from other devices. Determining the 3D position may involve determining a location of a boundary around a content area of the display. The content from the second device may be visible on the display of the second device and/or an associated display, e.g., a heads-up display provided in a car. In the example of Figure 1, sensors in the electronic device 105 may be used to identify the position of the second electronic device 130 in the physical environment 100.

At block 704, the method 700 involves determining a gaze direction of the user based on sensor data obtained via the one or more sensors (e.g., via inward/user-facing eye sensors). For example, as illustrated in the examples of Figures 2, 3, 4, and 5, sensors on the wearable electronic devices are used to identify the user's gaze directions 210, 410, 510.

At block 706, the method 700 further involves identifying a portion of the content based on the gaze direction and the 3D position of the display. In one example, this involves identifying the coordinate on the display. In another example, this involves identifying the user interface object at which the user is looking. For example, as illustrated in the examples of Figures 2 and 3, the user's gaze direction 210 and the 3D position of the display (associated with depiction 240) are used to identify that the user is gazing at a particular UI element, e.g., depictions 262 of a particular UI element. Similarly, as illustrated in the example of Figure 4, the user's gaze direction 410 and the 3D position of the display (associated with depiction 240) are used to identify that the user is gazing at a particular UI element, e.g., position 430 within the displayed text. Similarly, as illustrated in the example of Figure 5, the user's gaze direction 510 and the 3D position of the display (associated with depiction 530) are used to identify that the user is gazing at a particular UI element, e.g., the UI element associated with depiction 531.

At block 708, the method 700 further involves tracking a hand of the user based on sensor data obtained via the one or more sensors. This may involve detecting an input gesture (e.g., a pinch, the user tapping the steering wheel, the user tapping the top of the other hand while typing, etc.). For example, as illustrated in the examples of Figures 3, 4, 5, and 6, the sensors on the wearable electronic devices are used to track the user's hand 305, 405, 505, 606 to, for example, identify gestures, taps, and/or other hand activity.

At block 710, the method 700 further involves providing information to the second device based on identifying the portion of the content and the hand tracking, wherein the second device detects input associated with the content based on the information. The information provided to the second device may comprise a display position (e.g., xy coordinate) identified based on the gaze direction. For example, input may be detected (and responded to) as illustrated in the examples of Figure 2 (providing glow 280 based on gaze), Figure 3 (providing icon selection based on gaze and pinch), Figure 4 (providing cursor movement based on gaze and tap), Figure 5 (providing object selection based on gaze and tap), and Figure 6 (providing virtual object selection based on gaze and tap).

In some implementations, the method 700 further involves receiving user interface element information identifying interactable (e.g., clickable/selectable) objects from the second device, and the information provided to second device identifies an object of the interactable object with which the gaze direction corresponds.

The information provided to the second device may comprise an interaction corresponding to a click or touch event on the display.

In some implementations, hover-based feedback is provided by the second device based on the gaze direction. The hover-based feedback may be provided by the wearable device (e.g., an HMD) based on the gaze direction, wherein the wearable device overlays the hover-based feedback on top of the display's content in a view provided to the user. In some implementations, following hover-based feedback on an interactable object, a selection type input is recognized for the interactable object based on an event identified based on the hand tracking.

In some implementations, the method 700 further involves determining to enter a second device interaction mode based on determining an intention to interact with the second device.

Some implementations involve the method 700 providing a graphical or audible indication when the HMD enters a second device interaction mode.

In some implementations, input recognized based on the gaze direction is used to control the position of a cursor on the display of the second device and the tracking of the hand is used to initiate interaction events based on position of the cursor. Control of the position of the cursor and initiation of the interaction events may occur while fingers of the hand remain above a key region of a keyboard of the second device. In some implementations, the interaction events are initiated based on a tap on either hand of the user or a tap on the keyboard.

In some implementations, the display of the second display is a display on a dashboard of an automobile, and interaction events are initiated based on a tap on a steering wheel of the automobile while the user grips the steering wheel.

In some implementations, the content is displayed on the display of the second device and input to the second device is determined based on the user looking at the second display. In some implementations, the content is displayed via a heads-up display and input to the second device is determined based on the user looking at the content displayed via the heads-up display. In some implementations, the content is displayed by the HMD in a way that mimic a heads-up display and input to the second device is determined based on the user looking at the content displayed by the HMD.

In some implementations, the method 700 involves, based on a low-quality condition of data corresponding to gaze direction determination or hand tracking being detected: providing feedback indicating determined gaze direction; providing a warning; requiring a confirmation of input based on gaze direction or hand tracking; and/ or initiating a zoom to facilitate improved gaze direction determination quality.

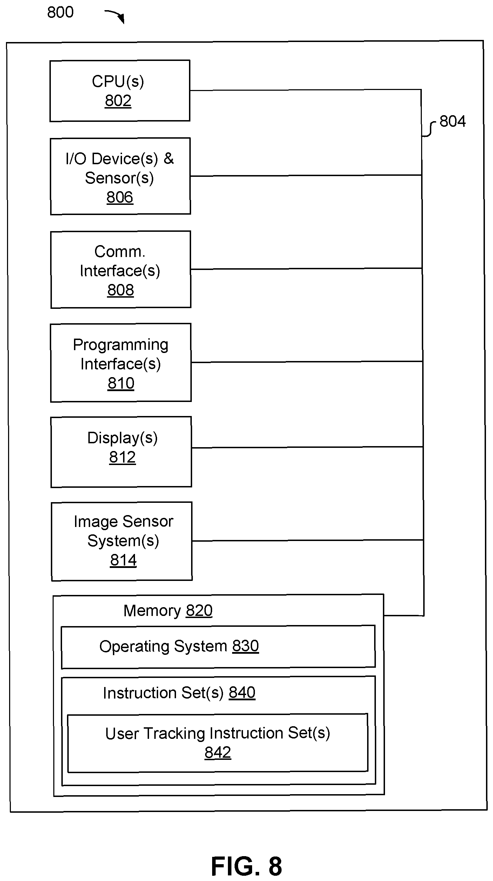

**Figure 8** is a block diagram of electronic device 800. Device 800 illustrates an exemplary device configuration for electronic device 105. While certain specific features are illustrated, those skilled in the art will appreciate from the present disclosure that various other features have not been illustrated for the sake of brevity, and so as not to obscure more pertinent aspects of the implementations disclosed herein. To that end, as a non-limiting example, in some implementations the device 800 includes one or more processing units 802 (e.g., microprocessors, ASICs, FPGAs, GPUs, CPUs, processing cores, and/or the like), one or more input/output (I/O) devices and sensors 806, one or more communication interfaces 808 (e.g., USB, FIREWIRE, THUNDERBOLT, IEEE 802.3x, IEEE 802.11x, IEEE 802.16x, GSM, CDMA, TDMA, GPS, IR, BLUETOOTH, ZIGBEE, SPI, I2C, and/or the like type interface), one or more programming (e.g., I/O) interfaces 810, one or more output device(s) 812 (e.g., including displays), one or more interior and/or exterior facing image sensor systems 814, a memory 820, and one or more communication buses 804 for interconnecting these and various other components.

In some implementations, the one or more communication buses 804 include circuitry that interconnects and controls communications between system components. In some implementations, the one or more I/O devices and sensors 806 include at least one of an inertial measurement unit (IMU), an accelerometer, a magnetometer, a gyroscope, a thermometer, one or more physiological sensors (e.g., blood pressure monitor, heart rate monitor, blood oxygen sensor, blood glucose sensor, etc.), one or more microphones, one or more speakers, a haptics engine, one or more depth sensors (e.g., a structured light, a time-of-flight, or the like), and/or the like.

In some implementations, the one or more output device(s) 812 include one or more displays configured to present a view of a 3D environment to the user. In some implementations, the one or more displays correspond to holographic, digital light processing (DLP), liquid-crystal display (LCD), liquid-crystal on silicon (LCoS), organic light-emitting field-effect transitory (OLET), organic light-emitting diode (OLED), surface-conduction electron-emitter display (SED), field-emission display (FED), quantum-dot light-emitting diode (QD-LED), micro-electromechanical system (MEMS), and/or the like display types. In some implementations, the one or more displays correspond to diffractive, reflective, polarized, holographic, etc. waveguide displays. In one example, the device 800 includes a single display. In another example, the device 800 includes a display for each eye of the user.

In some implementations, the one or more output device(s) 812 include one or more audio producing devices. In some implementations, the one or more output device(s) 812 include one or more speakers, surround sound speakers, speaker-arrays, or headphones that are used to produce spatialized sound, e.g., 3D audio effects. Such devices may virtually place sound sources in a 3D environment, including behind, above, or below one or more listeners. Generating spatialized sound may involve transforming sound waves (e.g., using head-related transfer function (HRTF), reverberation, or cancellation techniques) to mimic natural soundwaves (including reflections from walls and floors), which emanate from one or more points in a 3D environment. Spatialized sound may trick the listener's brain into interpreting sounds as if the sounds occurred at the point(s) in the 3D environment (e.g., from one or more particular sound sources) even though the actual sounds may be produced by speakers in other locations. The one or more output device(s) 812 may additionally or alternatively be configured to generate haptics.

In some implementations, the one or more image sensor systems 814 are configured to obtain image data that corresponds to at least a portion of a physical environment. For example, the one or more image sensor systems 814 may include one or more RGB cameras (e.g., with a complimentary metal-oxide-semiconductor (CMOS) image sensor or a charge-coupled device (CCD) image sensor), monochrome cameras, IR cameras, depth cameras, event-based cameras, and/or the like. In various implementations, the one or more image sensor systems 814 further include illumination sources that emit light, such as a flash. In various implementations, the one or more image sensor systems 814 further include an on-camera image signal processor (ISP) configured to execute a plurality of processing operations on the image data.

The memory 820 includes high-speed random-access memory, such as DRAM, SRAM, DDR RAM, or other random-access solid-state memory devices. In some implementations, the memory 820 includes non-volatile memory, such as one or more magnetic disk storage devices, optical disk storage devices, flash memory devices, or other non-volatile solid-state storage devices. The memory 820 optionally includes one or more storage devices remotely located from the one or more processing units 802. The memory 820 comprises a non-transitory computer readable storage medium.

In some implementations, the memory 820 or the non-transitory computer readable storage medium of the memory 820 stores an optional operating system 830 and one or more instruction set(s) 840. The operating system 830 includes procedures for handling various basic system services and for performing hardware dependent tasks. In some implementations, the instruction set(s) 840 include executable software defined by binary information stored in the form of electrical charge. In some implementations, the instruction set(s) 840 are software that is executable by the one or more processing units 802 to carry out one or more of the techniques described herein.

The instruction set(s) 840 include user tracking instruction set(s) 842 configured to, upon execution, perform gaze and/or hand tracking to facilitate display and/or input enhancements on another device as described herein. The instruction set(s) 840 may be embodied as a single software executable or multiple software executables.

Although the instruction set(s) 840 are shown as residing on a single device, it should be understood that in other implementations, any combination of the elements may be located in separate computing devices. Moreover, the figure is intended more as functional description of the various features which are present in a particular implementation as opposed to a structural schematic of the implementations described herein. As recognized by those of ordinary skill in the art, items shown separately could be combined and some items could be separated. The actual number of instructions sets and how features are allocated among them may vary from one implementation to another and may depend in part on the particular combination of hardware, software, and/or firmware chosen for a particular implementation.

It will be appreciated that the implementations described above are cited by way of example, and that the present invention is not limited to what has been particularly shown and described hereinabove. Rather, the scope includes both combinations and sub combinations of the various features described hereinabove, as well as variations and modifications thereof which would occur to persons skilled in the art upon reading the foregoing description and which are not disclosed in the prior art.

As described above, one aspect of the present technology is the gathering and use of sensor data that may include user data to improve a user's experience of an electronic device. The present disclosure contemplates that in some instances, this gathered data may include personal information data that uniquely identifies a specific person or can be used to identify interests, traits, or tendencies of a specific person. Such personal information data can include movement data, physiological data, demographic data, location-based data, telephone numbers, email addresses, home addresses, device characteristics of personal devices, or any other personal information.

The present disclosure recognizes that the use of such personal information data, in the present technology, can be used to the benefit of users. For example, the personal information data can be used to improve the content viewing experience. Accordingly, use of such personal information data may enable calculated control of the electronic device. Further, other uses for personal information data that benefit the user are also contemplated by the present disclosure.

The present disclosure further contemplates that the entities responsible for the collection, analysis, disclosure, transfer, storage, or other use of such personal information and/or physiological data will comply with well-established privacy policies and/or privacy practices. In particular, such entities should implement and consistently use privacy policies and practices that are generally recognized as meeting or exceeding industry or governmental requirements for maintaining personal information data private and secure. For example, personal information from users should be collected for legitimate and reasonable uses of the entity and not shared or sold outside of those legitimate uses. Further, such collection should occur only after receiving the informed consent of the users. Additionally, such entities would take any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices.

Despite the foregoing, the present disclosure also contemplates implementations in which users selectively block the use of, or access to, personal information data. That is, the present disclosure contemplates that hardware or software elements can be provided to prevent or block access to such personal information data. For example, in the case of user-tailored content delivery services, the present technology can be configured to allow users to select to "opt in" or "opt out" of participation in the collection of personal information data during registration for services. In another example, users can select not to provide personal information data for targeted content delivery services. In yet another example, users can select to not provide personal information, but permit the transfer of anonymous information for the purpose of improving the functioning of the device.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data. For example, content can be selected and delivered to users by inferring preferences or settings based on non-personal information data or a bare minimum amount of personal information, such as the content being requested by the device associated with a user, other non-personal information available to the content delivery services, or publicly available information.

In some embodiments, data is stored using a public/private key system that only allows the owner of the data to decrypt the stored data. In some other implementations, the data may be stored anonymously (e.g., without identifying and/or personal information about the user, such as a legal name, username, time and location data, or the like). In this way, other users, hackers, or third parties cannot determine the identity of the user associated with the stored data. In some implementations, a user may access their stored data from a user device that is different than the one used to upload the stored data. In these instances, the user may be required to provide login credentials to access their stored data.

Numerous specific details are set forth herein to provide a thorough understanding of the claimed subject matter. However, those skilled in the art will understand that the claimed subject matter may be practiced without these specific details. In other instances, methods apparatuses, or systems that would be known by one of ordinary skill have not been described in detail so as not to obscure claimed subject matter.

Unless specifically stated otherwise, it is appreciated that throughout this specification discussions utilizing the terms such as "processing," "computing," "calculating," "determining," and "identifying" or the like refer to actions or processes of a computing device, such as one or more computers or a similar electronic computing device or devices, that manipulate or transform data represented as physical electronic or magnetic quantities within memories, registers, or other information storage devices, transmission devices, or display devices of the computing platform.

The system or systems discussed herein are not limited to any particular hardware architecture or configuration. A computing device can include any suitable arrangement of components that provides a result conditioned on one or more inputs. Suitable computing devices include multipurpose microprocessor-based computer systems accessing stored software that programs or configures the computing system from a general-purpose computing apparatus to a specialized computing apparatus implementing one or more implementations of the present subject matter. Any suitable programming, scripting, or other type of language or combinations of languages may be used to implement the teachings contained herein in software to be used in programming or configuring a computing device.

Implementations of the methods disclosed herein may be performed in the operation of such computing devices. The order of the blocks presented in the examples above can be varied for example, blocks can be re-ordered, combined, and/or broken into sub-blocks. Certain blocks or processes can be performed in parallel.

The use of "adapted to" or "configured to" herein is meant as open and inclusive language that does not foreclose devices adapted to or configured to perform additional tasks or steps. Additionally, the use of "based on" is meant to be open and inclusive, in that a process, step, calculation, or other action "based on" one or more recited conditions or values may, in practice, be based on additional conditions or value beyond those recited. Headings, lists, and numbering included herein are for ease of explanation only and are not meant to be limiting.

It will also be understood that, although the terms "first," "second," etc. may be used herein to describe various elements, these elements should not be limited by these terms. These terms are only used to distinguish one element from another. For example, a first node could be termed a second node, and, similarly, a second node could be termed a first node, which changing the meaning of the description, so long as all occurrences of the "first node" are renamed consistently and all occurrences of the "second node" are renamed consistently. The first node and the second node are both nodes, but they are not the same node.

The terminology used herein is for the purpose of describing particular implementations only and is not intended to be limiting of the claims. As used in the description of the implementations and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if" may be construed to mean "when" or "upon" or "in response to determining" or "in accordance with a determination" or "in response to detecting," that a stated condition precedent is true, depending on the context. Similarly, the phrase "if it is determined [that a stated condition precedent is true]" or "if [a stated condition precedent is true]" or "when [a stated condition precedent is true]" may be construed to mean "upon determining" or "in response to determining" or "in accordance with a determination" or "upon detecting" or "in response to detecting" that the stated condition precedent is true, depending on the context.

The foregoing description and summary of the invention are to be understood as being in every respect illustrative and exemplary, but not restrictive, and the scope of the invention disclosed herein is not to be determined only from the detailed description of illustrative implementations but according to the full breadth permitted by patent laws. It is to be understood that the implementations shown and described herein are only illustrative of the principles of the present invention and that various modification may be implemented by those skilled in the art without departing from the scope and spirit of the invention.

Exemplary methods, systems, and non-transitory computer-readable storage media are set out in the following items.
1. A method comprising:
   at a head-mounted device (HMD) comprising a processor and one or more sensors:
   determining a three-dimensional position of a display of a second device, wherein content originating from the second device is visible to a user of the HMD;
   determining a gaze direction of the user based on sensor data obtained via the one or more sensors;
   identifying a portion of the content based on the gaze direction and the 3D position of the display;
   tracking a hand of the user based on sensor data obtained via the one or more sensors; and
   providing information to the second device based on identifying the portion of the content and the hand tracking, wherein the second device detects input associated with the content based on the information.
2. The method of item 1, wherein the information providing to the second device comprises a display position identified based on the gaze direction.
3. The method of any of items 1-2 further comprising receiving user interface element information identifying interactable objects from the second device, and the information provided to second device identifies an object of the interactable object with which the gaze direction corresponds.
4. The method of any of items 1-3, wherein the information provided to the second device comprises an interaction corresponding to a click or touch event on the display.
5. The method of any of item 1-4, wherein the second device is mobile phone or display embedded in an automobile dashboard.
6. The method of any of items 1-5, wherein hover-based feedback is provided by the second device based on the gaze direction.
7. The method of any of items 1-5, wherein hover-based feedback is provided by the HMD based on the gaze direction, wherein the HMD overlays the hover-based feedback on top of the display's content in a view provided to the user.
8. The method of any of items 1-7, wherein, following hover-based feedback on an interactable object, a selection type input is recognized for the interactable object based on an event identified based on the hand tracking.
9. The method of any of items 1-8, wherein determining the 3D position comprises determining a location of a boundary around a content area of the display.
10. The method of any of items 1-9 further comprising determining to enter a second device interaction mode based on determining an intention to interact with the second device.
11. The method of any of items 1-10, wherein a graphical or audible indication is provided when the HMD enters a second device interaction mode.
12. The method of any of items 1-11, wherein input recognized based on the gaze direction is used to control the position of a cursor on the display of the second device and the tracking the hand is used to initiate interaction events based on position of the cursor.
13. The method of item 12, wherein control of the position of the cursor and initiation of the interaction events occurs while fingers of the hand remain above a key region of a keyboard of the second device.
14. The method of item 13, wherein the interaction events are initiated based on a tap on either hand of the user or a tap on the keyboard.
15. The method of any of items 1-14, wherein the display is a display on a dashboard of an automobile, and interaction events are initiated based on a tap on a steering wheel of the automobile while the user grips the steering wheel.
16. The method of any of items 1-15, wherein the content is displayed on the display of the second device and input to the second device is determined based on the user looking at the second display.
17. The method of any of items 1-15, wherein the content is displayed via a heads-up display and input to the second device is determined based on the user looking at the content displayed via the heads-up display.
18. The method of any of items 1-15, wherein the content is displayed by the HMD in a way that mimic a heads-up display and input to the second device is determined based on the user looking at the content displayed by the HMD.
19. The method of any of items 1-18, further comprising, based on a low-quality condition of data corresponding to gaze direction determination or hand tracking being detected:
   providing feedback indicating determined gaze direction;
   providing a warning;
   requiring a confirmation of input based on gaze direction or hand tracking; or
   initiating a zoom to facilitate improved gaze direction determination quality.
20. A system comprising:
   a non-transitory computer-readable storage medium; and
   one or more processors coupled to the non-transitory computer-readable storage medium, wherein the non-transitory computer-readable storage medium comprises program instructions that, when executed on the one or more processors, cause the system to perform operations of any one of the methods of items 1-19.
21. A non-transitory computer-readable storage medium storing program instructions executable via one or more processors to perform operations of any one of the methods of items 1-19.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated.

## Claims

1. A method comprising:
at a head-mounted device (HMD) comprising a processor and one or more sensors:
determining a three-dimensional position of a display of a second device, wherein content originating from the second device is visible to a user of the HMD;
determining a gaze direction of the user based on sensor data obtained via the one or more sensors;
identifying a portion of the content based on the gaze direction and the 3D position of the display;
tracking a hand of the user based on sensor data obtained via the one or more sensors; and
providing information to the second device based on identifying the portion of the content and the hand tracking, wherein the second device detects input associated with the content based on the information.

2. The method of claim 1, wherein the information providing to the second device comprises a display position identified based on the gaze direction.

3. The method of any of claims 1-2 further comprising receiving user interface element information identifying interactable objects from the second device, and the information provided to second device identifies an object of the interactable object with which the gaze direction corresponds.

4. The method of any of claims 1-3, wherein the information provided to the second device comprises an interaction corresponding to a click or touch event on the display.

5. The method of any of claim 1-4, wherein the second device is mobile phone or display embedded in an automobile dashboard.

6. The method of any of claims 1-5, wherein hover-based feedback is provided by the second device based on the gaze direction.

7. The method of any of claims 1-5, wherein hover-based feedback is provided by the HMD based on the gaze direction, wherein the HMD overlays the hover-based feedback on top of the display's content in a view provided to the user.

8. The method of any of claims 1-7, wherein, following hover-based feedback on an interactable object, a selection type input is recognized for the interactable object based on an event identified based on the hand tracking.

9. The method of any of claims 1-8, wherein determining the 3D position comprises determining a location of a boundary around a content area of the display.

10. The method of any of claims 1-9 further comprising determining to enter a second device interaction mode based on determining an intention to interact with the second device.

11. The method of any of claims 1-10, wherein a graphical or audible indication is provided when the HMD enters a second device interaction mode.

12. The method of any of claims 1-11, wherein input recognized based on the gaze direction is used to control the position of a cursor on the display of the second device and the tracking the hand is used to initiate interaction events based on position of the cursor.

13. The method of claim 12, wherein control of the position of the cursor and initiation of the interaction events occurs while fingers of the hand remain above a key region of a keyboard of the second device.

14. A system comprising:
a non-transitory computer-readable storage medium; and
one or more processors coupled to the non-transitory computer-readable storage medium, wherein the non-transitory computer-readable storage medium comprises program instructions that, when executed on the one or more processors, cause the system to perform operations comprising any one of the methods of claims 1-13.

15. A non-transitory computer-readable storage medium storing program instructions executable via one or more processors to perform operations comprising any one of the methods of claims 1-13.
